(19)

Europäisches
Patentamt
European
Patent Office
Office européen
des brevets

(11) **EP 2 669 321 A1**

(12) **EUROPEAN PATENT APPLICATION**
published in accordance with Art. 153(4) EPC

(43) Date of publication:
**04.12.2013 Bulletin 2013/49**

(21) Application number: **12739914.5**

(22) Date of filing: **18.01.2012**

(51) Int Cl.:
*C08J 5/18* (2006.01)          *C08J 3/20* (2006.01)
*C08K 3/38* (2006.01)          *C08L 79/08* (2006.01)
*C08L 101/00* (2006.01)

(86) International application number:
**PCT/JP2012/000285**

(87) International publication number:
**WO 2012/101988 (02.08.2012 Gazette 2012/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2011 JP 2011016095**

(71) Applicant: **Nitto Denko Corporation
Osaka 567-8680 (JP)**

(72) Inventors:
• **TAKAYAMA, Yoshinari
Ibaraki-shi
Osaka 567-8680 (JP)**
• **TAGAWA, Kenichi
Ibaraki-shi
Osaka 567-8680 (JP)**
• **KITAGAWA, Daisuke
Ibaraki-shi
Osaka 567-8680 (JP)**

• **TAKAHASHI, Tatsuhiro
Yonezawa-shi
Yamagata 992-8510 (JP)**
• **YONETAKE, Koichiro
Yonezawa-shi
Yamagata 992-8510 (JP)**
• **AWANO, Hiroshi
Yonezawa-shi
Yamagata 992-8510 (JP)**
• **SHOJI, Takumi
Yonezawa-shi
Yamagata 992-8510 (JP)**
• **TADA, Mitsuteru
Yonezawa-shi
Yamagata 992-8510 (JP)**

(74) Representative: **Intès, Didier Gérard André et al
Cabinet Beau de Loménie
158, rue de l'Université
75340 Paris Cedex 07 (FR)**

(54) **HEAT-CONDUCTIVE FILM AND PRODUCTION METHOD THEREFOR**

(57)     A thermally conductive film (10) includes a matrix (12) made of a resin and flaky filler particles (14) dispersed in the matrix (12). The flaky filler particles (14) each has a flaky filler body (16) made of boron nitride and a $\gamma$-ferrite coating (18) on the filler body (16), and are oriented in a through-thickness direction of the thermally conductive film (10). The resin is, for example, polyimide.

FIG.1                                                    <u>10</u>

Through-thickness direction

In-plane direction

EP 2 669 321 A1

## Description

TECHNICAL FIELD

The present invention relates to a thermally conductive film and a method for producing the same. In particular, the present invention relates to a thermally conductive film having electrical insulating properties.

BACKGROUND ART

Conventionally, various thermally conductive films (heat dissipating sheets) are used to improve thermal contact between heat sinks and heat sources such as electronic components. In order to achieve efficient heat dissipation, it is important for a thermally conductive film to have a high through-thickness thermal conductivity.

In order to improve the thermal conductivity of a thermally conductive film, it is effective to add a filler having a high thermal conductivity to the material of the film. When a magnetic material is used as a filler and a magnetic field is applied during a film formation process so as to orient the filler in the through-thickness direction of the film, the resulting film has a further improved through-thickness thermal conductivity.

Patent Literature 1 discloses pitch-based carbon fibers coated with particles of a ferromagnetic material such as nickel, iron or cobalt. A film having a high through-thickness thermal conductivity can be produced by adding pitch-based carbon fibers to a silicone resin and applying a magnetic field thereto.

CITATION LIST

Patent Literature

Patent Literature 1: JP 2000-195998 A

SUMMARY OF INVENTION

Technical Problem

Patent Literature 1 proposes various techniques for coating the pitch-based carbon fibers with a ferromagnetic material, such as electroless plating, electroplating, physical vapor deposition, chemical vapor deposition, coating, immersion, and mechanochemical processing.

For example, electroless plating has the following drawbacks. Electroless  plating requires complicated processes, such as addition of a catalyst, activation treatment, and preparation of a plating solution, to form a coating. In addition, since a coating formed by plating has electrical conducting properties, it cannot be used for films that are required to have electrical insulating properties. There also is another problem. If many carbon fibers are remained uncoated with a ferromagnetic material, it is difficult to increase the degree of orientation of the fibers. Carbon fibers themselves have the following drawbacks. Carbon fibers are not suitable as a filler for use in films that are required to have electrical insulating properties, and the dispersibility thereof is not so good.

In view of the above circumstances, it is an object of the present invention to provide a film having a high thermal conductivity and excellent electrical insulating properties and a method for producing the film.

Solution to Problem

The present invention provides a thermally conductive film including: a matrix made of a resin; and flaky filler particles dispersed in the matrix. The flaky filler particles each include (i) a flaky filler body made of boron nitride and (ii) a $\gamma$-ferrite coating on the filler body, and are oriented in a through-thickness direction of the thermally conductive film.

In another aspect, the present invention provides a method for producing a thermally conductive film. This method includes steps of: preparing flaky filler particles each having a flaky filler body made of boron nitride and a $\gamma$-ferrite coating on the filler body; dispersing the flaky filler particles in a film forming material containing a resin; forming the film forming material containing the flaky filler particles into a film; applying a magnetic field in a through-thickness direction of the film, before the film solidifies, so that the flaky filler particles are oriented in the through-thickness direction of the film; and solidifying the film.

In still another aspect, the present invention provides a method for producing flaky filler particles each having a $\gamma$-ferrite coating. This method includes steps of: adding sodium hydroxide to a dispersion liquid containing iron sulfate and flaky filler bodies made of boron nitride; and after adding sodium hydroxide, stirring and filtering the dispersion liquid to obtain a solid, and drying the solid.

In still another aspect, the present invention provides a method for producing flaky filler particles each having a γ-ferrite coating. This method includes steps of: preparing a first dispersion liquid containing flaky filler bodies made of boron nitride; preparing a second dispersion liquid containing γ-ferrite fine particles by reducing iron sulfate with sodium hydroxide; and mixing the first dispersion liquid and the second dispersion liquid so as to deposit the fine particles on surfaces of the filler bodies.

Advantageous Effects of Invention

The thermally conductive film of the present invention contains flaky filler particles each having a flaky filler body made of boron nitride and a γ-ferrite coating on the filler body. Since boron nitride and γ-ferrite have electrical insulating properties, they can be suitably used in films that are required to have electrical insulating properties. Since boron nitride is one of the electrically insulating materials having very high thermal conductivities, it can be advantageously used as a filler for thermally conductive films. Since boron nitride has diamagnetic properties, the flaky filler bodies made of boron nitride can alone be oriented by a magnetic field. When the filler bodies are coated with ferromagnetic γ-ferrite, the resulting flaky filler particles have improved orientation. Therefore, the present invention can provide a thermally conductive film having a high thermal conductivity and excellent electrical insulating properties.

According to the method of the present invention, the above-described thermally conductive film of the present invention can be produced efficiently. The flaky filler bodies made of boron nitride can alone be oriented by a magnetic field. When the filler bodies are coated with ferromagnetic γ-ferrite, the resulting flaky filler particles exhibit higher orientation. Therefore, these flaky filler particles can be oriented more quickly than others when the same magnetic field is applied thereto. Furthermore, even if the flaky filler particles are densely packed, they can be relatively highly oriented. Therefore, the present invention can provide a thermally conductive film having a high thermal conductivity and excellent electrical insulating properties.

According to the method for producing flaky filler particles of the present invention, it is relatively easy to deposit γ-ferrite on the surfaces of the flaky filler bodies made of boron nitride. Unlike plating, the method of the present invention does not require complicated processes and makes it possible to deposit γ-ferrite uniformly on each of the flaky filler bodies.

BRIEF DESCRIPTION OF DRAWINGS

FIG. 1 is a schematic cross-sectional view of a thermally conductive film according to an embodiment of the present invention.

FIG. 2A is a schematic cross-sectional view of a flaky filler particle contained in the thermally conductive film shown in FIG. 1.

FIG. 2B is a schematic cross-sectional view of another flaky filler particle contained in the thermally conductive film shown in FIG. 1.

FIG. 3 is a schematic diagram showing a principle of measuring an in-plane thermal diffusivity.

FIG. 4A is an SEM image of a cross section of a thermally conductive film of Example 1.

FIG. 4B is an SEM image of a cross section of a thermally conductive film of Reference Example 1.

DESCRIPTION OF EMBODIMENTS

Hereinafter, an embodiment of the present invention is described.

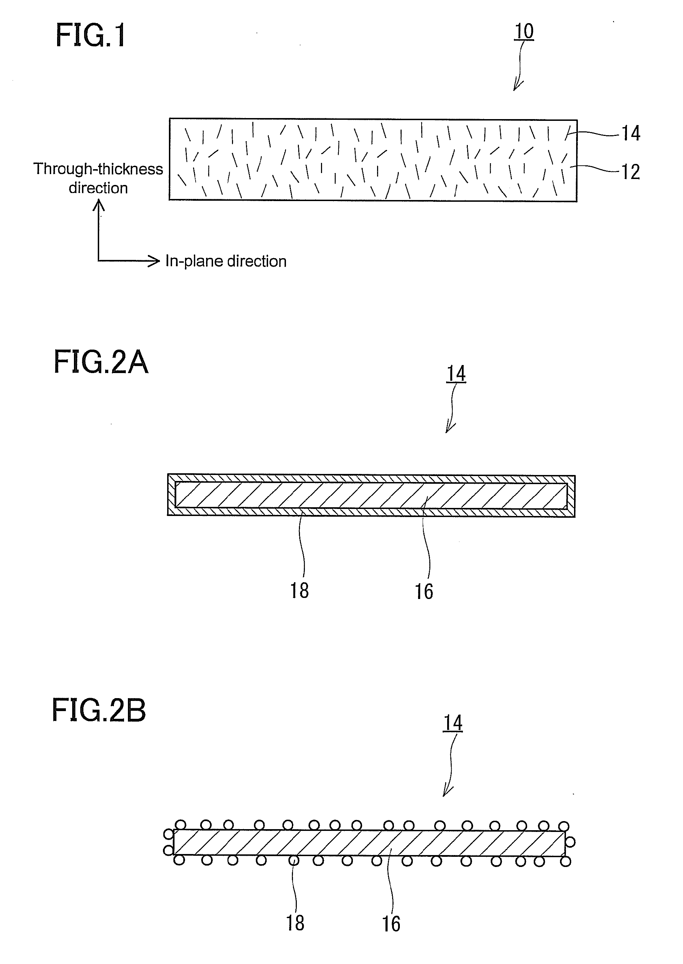

As shown in FIG. 1, a thermally conductive film 10 of the present embodiment includes a matrix 12 and flaky filler particles 14 dispersed in the matrix 12. The flaky filler particles 14 are entirely oriented in the through-thickness direction of the thermally conductive film 10. The matrix 12 is made of a resin. The thermally conductive film 10 typically has electrical insulating properties. The thermally conductive film 10 can be suitably used as a heat dissipating sheet in an electronic device.

The resin constituting the matrix 12 can be a thermosetting resin or a thermoplastic resin. Examples of the resin constituting the matrix 12 include epoxy, phenol, melamine, urea, unsaturated polyester, polyurethane, polyimide, polyamide-imide, polyarylate, nylon, polyphenylene sulfide (PPS), and liquid crystal polymer. When the matrix 12 is required to have high heat resistance, polyimide, polyamide-imide or polyarylate is preferably used.

The resin constituting the matrix 12 may be a photocurable resin. The photocurable resin is not particularly limited as long as it is cross-linked and cured upon exposure to ultraviolet light, electron beams, or the like. Specific examples of the photocurable resin include epoxy acrylate, urethane acrylate, polyester acrylate, polyether acrylate, reactive polyacrylate, carboxyl-modified reactive polyacrylate, polybutadiene acrylate, silicon acrylate, and aminoplast resin acrylate. In order to maintain the oriented state of the flaky filler particles 14, resins with low cure shrinkage, for example, addition reaction type resins such as silsesquioxane are particularly preferred.

When the thermally conductive film 10 is required to serve as an adhesive, the resin constituting the matrix 12 may be a photocurable adhesive. As the photocurable adhesive, a photocurable adhesive obtained by irradiating an acrylic  adhesive composition with ultraviolet light can be used. The acrylic adhesive composition contains, for example: (a) a vinyl monomer containing, as a main component, alkyl (meth)acrylate having an alkyl group with 2 to 14 carbon atoms or a partial polymer of the vinyl monomer; and (b) a photopolymerization initiator. The "main component" refers to a component whose mass content is the highest of all the components.

Whether or not the flaky filler particles 14 are oriented in the through-thickness direction of the thermally conductive film 10 can be determined by the criterion mentioned below. Specifically, when the ratio ($\lambda_2/\lambda_1$) of a thermal conductivity $\lambda_2$ in the through-thickness direction of the thermally conductive film 10 to a thermal conductivity $\lambda_1$ in the in-plane direction thereof is 0.2 or more, it can be determined that the flaky filler particles 14 are oriented in the through-thickness direction of the thermally conductive film 10. The upper limit of the ratio ($\lambda_2/\lambda_1$) is not particularly limited. However, for example, the upper limit is 5, in view of the anisotropy of the flaky filler particles 14 and the influence of the resin of the matrix 12.

As shown in FIG. 2A, the flaky filler particles 14 each has a flaky filler body 16 and a coating 18 on the filler body 16. The coating 18 does not necessarily have to completely cover the filler body 16, and the coating 18 may only partially cover the surface of the filler body 16. Furthermore, as shown in FIG. 2B, the coating 18 may be composed of fine particles deposited on the surface of the filler body 16. The filler particles 14 have an average particle size of 1 to 50 $\mu$m, for example. "The average particle size" refers to a particle size corresponding to the cumulative mass percentage of 50% (D50) in the particle size distribution measured by a laser diffraction/scattering method.

The filler body 16 is made of boron nitride. Since boron nitride is composed of elements (nitrogen and boron) having similar atomic weights and sizes, scattering due to phonons, which are the carriers of thermal energy, is less likely to occur. Therefore, boron nitride exhibits a high thermal conductivity.

The crystal structure of boron nitride is not particularly limited. Boron nitride may have any of a diamond-like cubic crystal structure, a wurtzite hexagonal crystal structure, a two-layer graphite-like hexagonal crystal structure, and a three-layer rhombohedral crystal structure. It is recommended to use hexagonal boron nitride having a relatively large anisotropic magnetic susceptibility and a high thermal conductivity of 100 W/(m·k) or more in the direction of the easy magnetization axis.

Since boron nitride has electrical insulating properties, the entire surface of  the filler body 16 made of boron nitride need not be coated with $\gamma$-ferrite. The entire surface of the flaky filler body 16 may be coated with $\gamma$-ferrite, or only a portion of the surface thereof may be coated with $\gamma$-ferrite.

The filler body 16 has a flake-like shape. In combination with the high thermal conductivity inherent to boron nitride, the flake-like shape sufficiently contributes to the formation of the path of thermal conduction.

The coating 18 is made of $\gamma$-ferrite ($\gamma$-$Fe_2O_3$). $\gamma$-ferrite is known as a ferromagnetic (specifically ferrimagnetic) and electrically insulating material. The amount of $\gamma$-ferrite deposited, that is, the weight of the coating 18 is, for example, 1 to 50% by weight with respect to the weight of the filler particle 14. When an appropriate amount of $\gamma$-ferrite is deposited on the surface of the filler body 16, the effect of increasing the orientation can be obtained sufficiently and the adhesion between $\gamma$-ferrite (coating 18) and the filler body 16 also is well maintained. A preferable amount of $\gamma$-ferrite deposited is, for example, in the range of 10 to 30% by weight.

In the present embodiment, the coating 18 of $\gamma$-ferrite forms the outermost surface of the flaky filler particle 14. Another layer may be provided on the coating 18. Another layer may be provided between the filler body 16 and the coating 18.

Next, a method for producing the thermally conductive film 10 is described.

First, the flaky filler particles 14 are prepared. Specifically, the flaky filler particles 14 can be obtained by the following two methods.

In the first method, a dispersion liquid containing the filler bodies 16, iron sulfate, and a dispersion medium is prepared. For example, the above dispersion liquid can be obtained by adding powdery iron sulfate or an aqueous iron sulfate solution to an aqueous dispersion of the filler bodies 16. That is, water can be suitably used as the dispersion medium of the dispersion liquid. Sodium hydroxide is added to the resulting dispersion liquid. Specifically, granular sodium hydroxide or an aqueous sodium hydroxide solution is added to the dispersion liquid. According to the first method, since iron sulfate acts as a dispersing agent for the filler bodies 16, the filler bodies 16 can be dispersed more uniformly in the dispersion liquid. Iron sulfate dissolved in the aqueous dispersion can be adsorbed onto the filler bodies 16. As a result, $\gamma$-ferrite can be reliably deposited on the filler bodies 16.

The concentration of iron sulfate in the dispersion liquid and the concentration of the aqueous sodium hydroxide solution should be adjusted so that the amount of $\gamma$-ferrite deposited falls within an appropriate range. During the reaction, the dispersion liquid is maintained, for example, at pH 7 to 8, and the  temperature of the dispersion liquid is maintained, for example, at 60°C to 100°C.

After sodium hydroxide is added, the dispersion liquid is stirred, for example, for 1 to 2 hours. Then, the dispersion liquid is filtered to obtain a solid, and the solid is dried. Thus, the flaky filler particles 14 each having the filler body 16 and the γ-ferrite coating 18 are obtained. A heat treatment may be performed to dry the solid sufficiently. The heating temperature is, for example, 60°C to 100°C. The heating time is, for example 6 to 24 hours.

In the second method, a first dispersion liquid containing the filler bodies 16 made of boron nitride and a dispersion medium (for example, water) is prepared. In addition to the first dispersion liquid, a second dispersion liquid containing γ-ferrite fine particles and a dispersion medium is prepared by reducing iron sulfate with sodium hydroxide in the dispersion medium (for example, in the water). The first dispersion liquid and the second dispersion liquid are mixed together so as to deposit the γ-ferrite fine particles on the surfaces of the filler bodies 16. Then, the mixed dispersion liquid is stirred sufficiently. The dispersion liquid is filtered to obtain a solid, and the solid is dried. Thus, the flaky filler particles 14 each having the filler body 16 and the γ-ferrite coating 18 are obtained. The flaky filler particles 14 can also be obtained by the second method. As various conditions for the second method such as pH conditions, temperature conditions, and drying conditions, the same conditions as those of the first method may be employed, or the conditions suitable for the second method may be employed.

In the first method, γ-ferrite is formed on the surfaces of the filler bodies 16. Therefore, γ-ferrite can be reliably deposited on the filler bodies 16. In this regard, the first method is more advantageous than the second method.

It is preferable, before the filtration, to remove γ-ferrite fine particles that have not been deposited on the filler bodies 16 from the dispersion liquid. The filler bodies 16 are more likely to settle than the γ-ferrite fine particles. The filler bodies 16 on which γ-ferrite has been deposited (that is, the flaky filler particles 14) are still more likely to settle. Therefore, the γ-ferrite fine particles can be removed from the dispersion liquid by a sedimentation or centrifugation method. For example, the dispersion liquid is allowed to stand still so that the filler bodies 16 and the flaky filler particles 14 are allowed to settle, and then the supernatant is removed. Thus, the γ-ferrite fine particles can be removed from the dispersion liquid.

Next, the flaky filler particles 14 are dispersed in a film forming material containing a resin. When the resin is thermosetting, the film forming material can be a solution containing the resin. A coating liquid for forming the thermally conductive film 10 is obtained by dispersing the flaky filler particles 14 in the solution containing the resin. The amount of the filler particles 14 added is, for example, 10 to 70% by volume or 20 to 60% by volume of the solid in the coating liquid. The amount of the filler particles 14 added should be adjusted in view of the mechanical strength, appearance, etc. of the desired thermally conductive film 10.

An example of the solution containing the resin is a polyimide precursor solution. The polyimide precursor solution is commonly called a polyamide acid (polyamic acid) solution. Since polyimide has excellent electrical insulating properties, it can be suitably used as a material for thermally conductive films that are required to have electrical insulating properties.

Any known polyamide acid solution can be used. Specifically, a polyamide acid solution obtained by a polymerization reaction between an acid dianhydride and a diamine in a solvent can be used. Examples of the acid dianhydride include pyromellitic dianhydride, 3,3',4,4'-benzophenonetetracarboxylic dianhydride, 3,3',4,4'-biphenyltetracarboxylic dianhydride, 2,3,3',4'-biphenyltetracarboxylic dianhydride, 2,3,6,7-naphthalenetetracarboxylic dianhydride, 1,2,5,6-naphthalenetetracarboxylic dianhydride, and 1,4,5,8-naphthalenetetracarboxylic dianhydride. Examples of the diamine include 4,4'-diaminodiphenyl ether, 4,4'-diaminodiphenyl methane, 3,3'-diaminodiphenyl methane, 3,3'-dichlorobenzidine, 4,4'-diaminodiphenyl sulfide, 3,3'-diaminodiphenyl sulfone, 1,5-diaminonaphthalene, m-phenylenediamine, p-phenylenediamine, 3,3'-dimethyl-4,4'-biphenyldiamine, benzidine, 3,3'-dimethylbenzidine, 3,3'-dimethoxybenzidine, 4,4'-diaminodiphenyl sulfone, 4,4'-diaminodiphenyl sulfide, and 4,4'-diaminodiphenyl propane.

The solvent used for polymerization reaction between the acid anhydride and the diamine also is not particularly limited. A polar solvent can be suitably used from the viewpoint of solubility. Specific examples of the polar solvent include N,N-dimethylformamide, N,N-dimethylacetamide, N,N-diethylformamide, N,N-diethylacetamide, N,N-dimethylmethoxyacetamide, dimethylsulfoxide, hexamethylphosphoric triamide, N-methyl-2-pyrrolididone, pyridine, dimethylsulfoxide, tetramethylene sulfone, and dimethyltetramethylene sulfone. These solvents may be used alone or in the form of a solvent mixture of two or more of them. Furthermore, phenols such as cresol, phenol and xylenol, benzonitrile, dioxane, butyrolactone, xylene, cyclohexane, hexane, benzene, toluene, etc. may be mixed with the above-mentioned organic polar solvent. Since the presence of water causes hydrolysis of polyamide acid to reduce the molecular weight thereof, it is preferable to perform synthesis and storage of the polyamide acid in a dry environment.

The polyamide acid solution can be obtained by reacting the above acid anhydride (a) and the diamine (b) in an organic polar solvent. In this case, the monomer concentration (the concentration of (a) + (b) in the solvent) is set according to various conditions, and 5 to 30% by weight is preferred. It is preferable to set the reaction temperature at 80°C or lower. Particularly preferably, the reaction temperature is 5°C to 50°C. Preferably, the reaction time is 0.5 to 10 hours.

The viscosity of the polyamide acid solution is, for example, 10 to 10000 poises (1 to 1000 Pa·s), 10 to 5000 poises (1 to 500 Pa·s), or 50 to 5000 poises (5 to 500 Pa·s) (a B-type viscometer, at 23°C). When the viscosity is too low, so-called runs or drips, or repellency of the coating film occur, which easily cause uneven thickness of the coating film. On the other hand, when the viscosity is too high, the leveling and defoaming properties decrease, which may make it difficult to form a coating film.

Next, the coating liquid containing the flaky filler particles 14 is applied to a support so as to form a coating film on the support. The application method is not particularly limited. Any known method using a bar coater, a doctor blade, a spray coater, a nozzle coater, a dip coater, or the like can be employed. A support that is chemically resistant to polyamide acid, for example, a glass plate can be used as the support. In order to increase the uniformity of the thickness of the thermally conductive film 10, it is recommended to select a support having a highly smooth surface. It is preferable to place the support horizontally. The amount of the coating liquid applied to the support can be set so that the resulting thermally conductive film 10 has a thickness of 20 to 500 $\mu$m.

Next, a magnetic field is applied in the through-thickness direction of the coating film, before the coating film solidifies, so that the flaky filler particles 14 are oriented in the through-thickness direction of the coating film. When the magnetic field is applied in the through-thickness direction of the coating film, the flaky filler particles 14 are oriented such that the in-plane direction of the flaky filler particles 14 is parallel to the direction of the magnetic field. This orientation produces the effect of increasing the through-thickness thermal conductivity. The application of the magnetic field can be performed by placing a magnet in such a manner that the magnetic field is applied in the direction perpendicular to the coating film. For example, a magnetic field having a magnetic flux density of 0.3 T (tesla) or more, preferably 2 T or more can be applied. The upper limit of the magnetic flux density is not particularly limited, and it is, for example, 15 T. The solvent may be removed by drying the coating film at a temperature lower than the imidization temperature, with a magnetic field applied so as to maintain the orientation of the filler particles 14 by the magnetic field.

Next, the coating film is solidified. Specifically, the coating film is imidized. The imidization may be performed by heating the coating film to a temperature equal to or higher than the imidization temperature or by chemical dehydration of the film.

In the case where the imidization is performed by heating, the coating film is heated, for example, at 300°C to 400°C for 10 to 60 minutes, depending on the composition of the polyimide and the presence or absence of a catalyst.

When a dehydrating agent is added to the coating liquid, imidization by chemical dehydration can be performed. Examples of the dehydrating agent include organic carboxylic anhydrides, N,N'-dialkylcarbodiimides, lower fatty acid halides, halogenated lower fatty acid anhydrides, aryl phosphonic dihalides, and thionyl halides. Among these, organic carboxylic anhydrides can be suitably used.

Examples of organic carboxylic anhydrides include acetic anhydride, propionic anhydride, butanoic anhydride, valeric anhydride, and intermolecular anhydride of these. Furthermore, anhydrides of aromatic monocarboxylic acids (such as benzoic acid and naphthoic acid), and anhydrides of carbonic acid, formic acid and aliphatic ketenes (such as ketene and dimethylketene) also can be used as the organic carboxylic anhydrides. These can be used alone or in the form of a mixture of two or more of them. Among these, acetic anhydride can be suitably used.

The amount of the dehydrating agent added is, for example, 0.5 to 4 mol (or 1 to 3 mol) per 1 mol of polyamide contained in the coating liquid. The use of an appropriate amount of dehydrating agent not only allows the imidization reaction to proceed sufficiently but also increases the strength of the thermally conductive film 10 to be obtained. In addition, the use of an appropriate amount of dehydrating agent eliminates the need to raise the temperature to evaporate excess dehydrating agent.

In order to promote imidization, tertiary amine may be added to the coating liquid. Examples of the tertiary amine include trimethylamine, triethylamine, triethylenediamine, pyridine, picoline, quinoline, isoquinoline, and lutidine. Among these, pyridine, $\beta$-picoline, $\gamma$-picoline, quinoline, and isoquinoline can be suitably used.

The amount of tertiary amine added is 0.1 to 2 mol (or 0.2 to 1 mol) per 1 mol of polyamide contained in the coating liquid. The use of an appropriate amount of tertiary amine increases the strength of the thermally conductive film 10 to be obtained. In addition, the use of an appropriate amount of tertiary amine is less likely to cause such a problem as tertiary amine residues in the thermally conductive film 10. The tertiary amine residues may contaminate the production line of the thermally conductive film 10, or create a need to increase the temperature to evaporate excess tertiary amine.

On the other hand, when the resin is thermoplastic, the film forming material can be a melt of the resin. In this case, the melt of the resin can be formed into a film by, for example, extrusion molding. A magnetic field is applied in the through-thickness direction of the film to orient the filler particles 14, with the ambient temperature maintained at a temperature equal to or higher than the glass transition temperature of the resin to prevent solidification of the film. After that, the ambient temperature is lowered to a temperature lower than the glass transition temperature of the resin (for example, room temperature) so as to solidify the film. The film forming material may be a photocurable resin or a photocurable adhesive.

The thermally conductive film 10 of the present embodiment is obtained by performing each of the above steps.

Before use, the thermally conductive film 10 of the present embodiment can be attached to a board on which heat sources such as electronic components are mounted, a housing of the board, etc. An adhesive layer may be provided on one or both sides of the thermally conductive film 10. An acrylic adhesive or a silicone adhesive can be used as the material of the adhesive layer. Since a silicon adhesive has excellent heat resistance, it is suitable for the thermally conductive film 10 used under high temperature.

EXAMPLES

Hereinafter, examples of the present invention are described. The present invention is not limited to these examples.

(Example 1)

1 g of flaky boron nitride ("GP", Denki Kagaku Kogyo K.K., average particle size of 10 $\mu$m) was added to 1 liter of pure water heated at 80°C, with stirring at 300 rpm. Thus, an aqueous boron nitride dispersion was obtained. Next, 5 g of iron sulfate was added to this aqueous dispersion. Iron sulfate was sufficiently dissolved in the aqueous dispersion, so that iron sulfate was sufficiently adsorbed onto boron nitride. Next, 1.2 g of sodium hydroxide was further added to the aqueous dispersion, followed by stirring for 2 hours. Then, the aqueous dispersion was suction-filtered through filter paper to obtain a solid. The solid was heated and dried under the conditions of 80°C and 8 hours in a vacuum dryer. Thus, flaky filler particles having $\gamma$-ferrite coatings were obtained.

Equal moles of pyromellitic acid and p-phenylenediamine were dissolved in an appropriate amount of N-methyl-2-pyrrolidone so as to obtain a monomer concentration of 20% by weight in the resulting solution. The solution was allowed to react with stirring at room temperature, and further stirred with heating to 70°C. Thus, a polyamide acid solution having a viscosity of 100 Pa·s was obtained, as measured with a B-type viscometer at 23°C.

The flaky filler particles, in an amount of 20% by volume relative to the amount of the solid in the polyamide acid solution, were added to the polyamide acid solution. Then, the flaky filler particles were dispersed in the polyamide acid solution in a planetary centrifugal mixer. Thus, a coating liquid for forming a film was obtained. The coating liquid was applied to a glass plate so as to form a coating with a thickness of 0.5 mm. The coating was heated and dried under the conditions of 60°C and 1 hour, with a magnetic field with a magnetic flux density of 2 T (tesla) applied in the through-thickness direction of the coating.

The dry film thus obtained was peeled off the glass plate, and then placed on a pin stenter and heated in stages, i.e., at 120°C for 30 minutes and then at 320°C for 20 minutes, to imidize the film. Thus, a thermally conductive film of Example 1 was obtained.

(Example 2)

A thermally conductive film of Example 2 was obtained in the same manner as in Example 1, except that the amount of the filler particles added was changed.

(Example 3)

A thermally conductive film of Example 3 was obtained in the same manner as in Example 1, except that "SGP" manufactured by Denki Kagaku Kogyo K.K. (average particle size of 18 $\mu$m) was used as flaky boron nitride.

(Reference Examples 1 to 3)

Thermally conductive films of Reference Examples 1 to 3 were obtained in the same manner as in Examples 1 to 3, except that a magnetic field was not applied.

Table 1 shows the thicknesses of the films of Examples 1 to 3 and Reference Examples 1 to 3.

(Evaluation)

(1) Cross-sectional observation using electron microscope

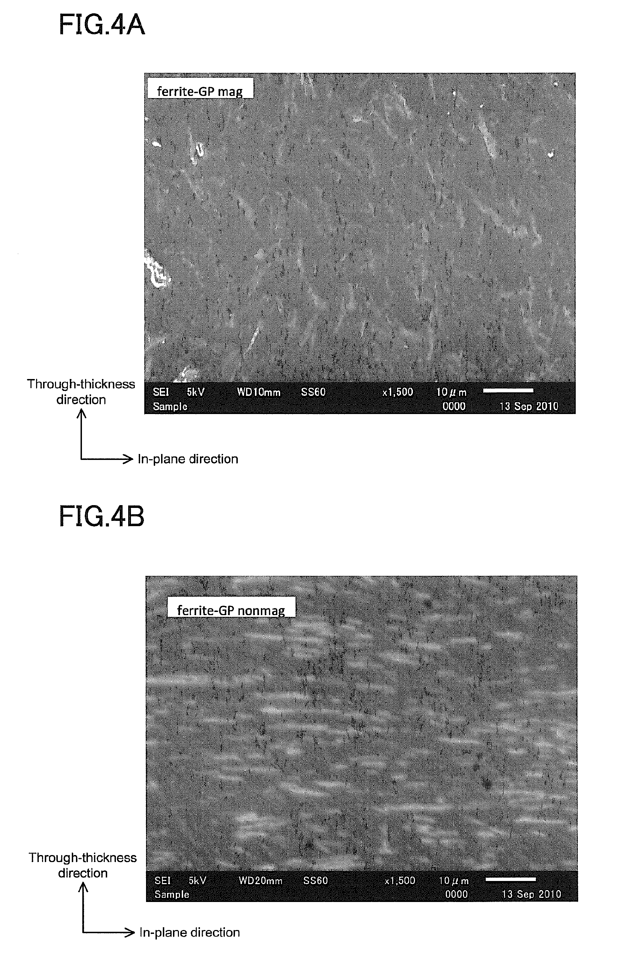

The cross-sections of the films of Example 1 and Reference Example 1 were observed with a scanning electron microscope ("S-4700", Hitachi Ltd.). FIG. 4A and FIG. 4B show the results. As shown in FIG. 4A, in the film of Example 1, the filler particles were oriented in the through-thickness direction of the film. As shown in FIG. 4B, in the film of Reference Example 1, the filler particles were oriented in the in-plane direction of the film.

(2) X-ray diffractometry

The films of Example 1, Example 3, Reference Example 1 and Reference Example 3 were subjected to X-ray diffractometry. Attention was focused on the peak intensity of the (002) plane of $\gamma$-ferrite. The intensity in Example 1 was 4098 (counts), the intensity in Reference Example 1 was 567 (counts), the intensity in Example 3 was 1175 (counts), and the intensity in Reference Example 3 was 814 (counts). These results reveal that the application of a magnetic field improved the degree of orientation of the filler particles.

(3) Measurement of thermal conductivity

The in-plane thermal conductivity $\lambda_1$ and through-thickness thermal conductivity $\lambda_2$ of each film were measured. More specifically, the thermal conductivities $\lambda_1$ and $\lambda_2$ were calculated by substituting the in-plane thermal diffusivity $\alpha_1$, through-thickness thermal diffusivity $\alpha_2$, density p, and specific heat Cp, respectively, into the following formulae. Table 1 shows the results.

$$\lambda_1(W/(m\cdot K)) = \rho(kg/m^3) \times Cp(J/(kg\cdot K)) \times \alpha_1(m^2/s)$$

$$\lambda_2(W/(m\cdot K)) = \rho(kg/m^3) \times Cp(J/(kg\cdot K)) \times \alpha_2(m^2/s)$$

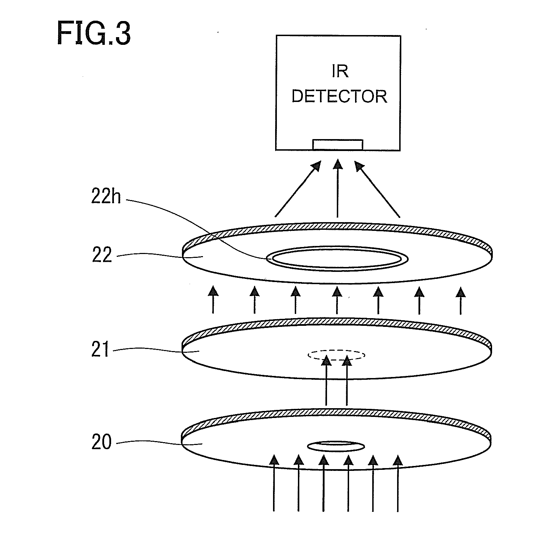

The thermal diffusivities $\alpha_1$ and $\alpha_2$ were measured using a xenon flash analyzer ("LFA 447 NanoFlash (registered trademark)", Bruker AXS). That is, the thermal diffusivities $\alpha_1$ and $\alpha_2$ were measured by a known laser flash method. The through-thickness thermal diffusivity $\alpha_1$ was analyzed based on the "Cowan model" employed in LFA 447 NanoFlash. The in-plane thermal diffusivity $\alpha_2$ was analyzed by the "In Plane method" employed in LFA 447 NanoFlash. In the "In Plane method", as shown in FIG. 3, only the central portion of a sample 21 (thermally conductive film) is heated by a first mask 20. The heat absorbed by the center portion of the surface of the sample 21 not only travels toward the back surface of the sample 21 but also diffuses in the radial direction. When a temperature rise on the back surface of the sample 21 is measured through a circular slit 22h provided in a second mask 22, the resulting temperature rise curve can be expressed as a theoretical solution using modified Bessel functions. The in-plane thermal diffusivity can be obtained by fitting this theoretical solution to the measured temperature rise curve. In the case where the sample 21 is anisotropic, the data of the through-thickness thermal diffusivity is also used.

The specific heat Cp was measured using a differential scanning calorimeter (SII Nano Technology Inc.) (rate of temperature rise: 10°C/min.). The density $\rho$ was measured by the butanol immersion method.

Table 1

| | Amount of filler added | Type of filler | Magnetic field | Thickness (mm) | $\lambda_2$ (W/(m·K)) | $\lambda_1$ (W/(m·K)) | $\lambda_2/\lambda_1$ |
|---|---|---|---|---|---|---|---|
| Ref. Example 1 | 20 vol.% | ferrite-GP | Not applied | 0.08 | 0.7 | 6.8 | 0.11 |
| Example 1 | | | Applied | 0.09 | 3.5 | 6.8 | 0.51 |
| Ref. Example 2 | 35 vol.% | ferrite-GP | Not applied | 0.10 | 0.9 | 13.4 | 0.06 |
| Example 2 | | | Applied | 0.14 | 6.3 | 8.7 | 0.73 |
| Ref. Example 3 | 20 vol.% | ferrite-SGP | Not applied | 0.10 | 1.0 | 7.4 | 0.13 |
| Example 3 | | | Applied | 0.09 | 2.9 | 6.6 | 0.43 |

The thermal conductivities $\lambda_2$ of the films of Examples 1 to 3 were higher than the thermal conductivities $\lambda_2$ of the films of Reference Examples 1 to 3. The ratios ($\lambda_2/\lambda_1$) of the films of Examples 1 to 3 were 0.51, 0.73, and 0.43, respectively, and they were higher than "0.2", which was the criterion for determining whether the filler particles were oriented or not.

(4) Measurement of surface resistivity

The surface resistivity of each film was measured using a resistivity meter ("Hiresta UP MCP-HT450", Mitsubishi Chemical Analytech Co., Ltd., probe: URS type, applied voltage: 100 V). All the measurement results exceeded the measurement limit of the resistivity meter. Presumably, this means that all the films had surface resistivities of $10^{14}$ ohms per square or more.

**Claims**

1. A thermally conductive film comprising:

   a matrix made of a resin; and
   flaky filler particles dispersed in the matrix, wherein
   the flaky filler particles each comprise (i) a flaky filler body made of boron nitride and (ii) a $\gamma$-ferrite coating on the filler body, and are oriented in a through-thickness direction of the thermally conductive film.

2. The thermally conductive film according to claim 1, wherein the resin is polyimide.

3. The thermally conductive film according to claim 1, wherein a ratio ($\lambda_2/\lambda_1$) of a thermal conductivity $\lambda_2$ in the through-thickness direction to a thermal conductivity $\lambda_1$ in an in-plane direction is 0.2 or more.

4. The thermally conductive film according to claim 1, wherein the resin is a photocurable resin or a photocurable adhesive.

5. A method for producing a thermally conductive film, comprising steps of:

   preparing flaky filler particles each having a flaky filler body made of boron nitride and a $\gamma$-ferrite coating on the filler body;
   dispersing the flaky filler particles in a film forming material containing a resin;
   forming the film forming material containing the flaky filler particles into a film;
   applying a magnetic field in a through-thickness direction of the film, before the film solidifies, so that the flaky filler particles are oriented in the through-thickness direction of the film; and
   solidifying the film.

6. The method for producing a thermally conductive film according to claim 5, wherein
   the film forming material is a solution containing the resin, and
   the solution is a polyimide precursor solution.

7. The method for producing a thermally conductive film according to claim 5, wherein the step of preparing the flaky filler particles comprises steps of: (i) adding sodium hydroxide to a dispersion liquid containing iron sulfate and the flaky filler bodies made of boron nitride; and (ii) after adding sodium hydroxide, stirring and filtering the dispersion liquid to obtain a solid, and drying the solid.

8. The method for producing a thermally conductive film according to claim 5, wherein the step of preparing the flaky filler particles comprises steps of: (i) preparing a first dispersion liquid containing the flaky filler bodies made of boron nitride; (ii) preparing a second dispersion liquid containing $\gamma$-ferrite fine particles by reducing iron sulfate with sodium hydroxide; and (iii) mixing the first dispersion liquid and the second dispersion liquid so as to deposit the fine particles on surfaces of the filler bodies.

9. The method for producing a thermally conductive film according to claim 5, wherein the film forming material is a photocurable resin or a photocurable adhesive.

10. A method for producing flaky filler particles each having a $\gamma$-ferrite coating, the method comprising steps of:

    adding sodium hydroxide to a dispersion liquid containing iron sulfate and flaky filler bodies made of boron nitride; and
    after adding sodium hydroxide, stirring and filtering the dispersion liquid to obtain a solid, and drying the solid.

11. A method for producing flaky filler particles each having a γ-ferrite coating, the method comprising steps of:

preparing a first dispersion liquid containing flaky filler bodies made of boron nitride;
preparing a second dispersion liquid containing γ-ferrite fine particles by reducing iron sulfate with sodium hydroxide; and
mixing the first dispersion liquid and the second dispersion liquid so as to deposit the fine particles on surfaces of the filler bodies.

# FIG.1

10

Through-thickness
direction

In-plane direction

14

12

# FIG.2A

14

18       16

# FIG.2B

14

18       16

FIG.3

IR
DETECTOR

22h

22

21

20

## FIG.4A

ferrite-GP mag

SEI 5kV WD10mm SS60 x1,500 10 μm
Sample 0000 13 Sep 2010

Through-thickness direction

In-plane direction

## FIG.4B

ferrite-GP nonmag

SEI 5kV WD20mm SS60 x1,500 10 μm
Sample 0000 13 Sep 2010

Through-thickness direction

In-plane direction

| INTERNATIONAL SEARCH REPORT | International application No. |
|---|---|
| | PCT/JP2012/000285 |

A.  CLASSIFICATION OF SUBJECT MATTER
*C08J5/18*(2006.01)i, *C08J3/20*(2006.01)i, *C08K3/38*(2006.01)i, *C08L79/08*
(2006.01)i, *C08L101/00*(2006.01)i

According to International Patent Classification (IPC) or to both national classification and IPC

B.  FIELDS SEARCHED

Minimum documentation searched (classification system followed by classification symbols)
C08J5/18, C08J3/00-3/28, C08K3/00-3/40, C08L79/00-79/08,
C08L101/00-101/14

Documentation searched other than minimum documentation to the extent that such documents are included in the fields searched
　　Jitsuyo Shinan Koho　　　　　1922-1996　　Jitsuyo Shinan Toroku Koho　　1996-2012
　　Kokai Jitsuyo Shinan Koho　　1971-2012　　Toroku Jitsuyo Shinan Koho　　1994-2012

Electronic data base consulted during the international search (name of data base and, where practicable, search terms used)
　　CA/REGISTRY(STN), JSTPlus/JMEDPlus/JST7580(JDreamII)

C.  DOCUMENTS CONSIDERED TO BE RELEVANT

| Category* | Citation of document, with indication, where appropriate, of the relevant passages | Relevant to claim No. |
|---|---|---|
| A | JP 2002-69392 A  (Polymatech Co., Ltd.), 08 March 2002 (08.03.2002), entire text & US 2002/0050585 A1    & EP 1184899 A2 | 1-11 |
| A | JP 2006-169534 A  (E.I. Du Pont De Nemours & Co.), 29 June 2006 (29.06.2006), entire text & US 2006/0127686 A1    & EP 1672009 A1 & KR 10-2006-0067879 A | 1-11 |
| A | JP 2010-189244 A  (Kaneka Corp.), 02 September 2010 (02.09.2010), entire text (Family: none) | 1-11 |

☒　Further documents are listed in the continuation of Box C.　　☐　See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 　　08 February, 2012 (08.02.12) | 　　21 February, 2012 (21.02.12) |

| Name and mailing address of the ISA/ | Authorized officer |
|---|---|
| 　　Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/000285 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-146129 A (Toray Industries, Inc.), 14 June 2007 (14.06.2007), entire text (Family: none) | 1-11 |
| A | JP 2008-195766 A (Denso Corp.), 28 August 2008 (28.08.2008), entire text (Family: none) | 1-11 |
| A | JP 2000-191987 A (Polymatech Co., Ltd.), 11 July 2000 (11.07.2000), entire text (Family: none) | 1-11 |
| A | JP 51-53000 A (Sumitomo Chemical Co., Ltd.), 11 May 1976 (11.05.1976), entire text (Family: none) | 1-11 |
| A | JP 2007-297597 A (E.I. Du Pont De Nemours & Co.), 15 November 2007 (15.11.2007), entire text & US 2007/0231568 A1 & US 2010/0311901 A1 | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000195998 A